# EUROPEAN PATENT SPECIFICATION

(11) **EP 3 033 589 B1**
(45) Date of publication and mention of the grant of the patent: **06.12.2017**
(21) Application number: 14755288.9
(22) Date of filing: 08.08.2014
(51) Int. Cl.: G01C 21/20, G06F 3/0484

(54) **METHODS FOR SEAMLESS MOBILE USE EXPERIENCE BETWEEN OUTDOOR AND INDOOR MAPS**
VERFAHREN FÜR NAHTLOSE MOBILNUTZUNGSERFAHRUNG ZWISCHEN AUSSEN- UND INNENKARTEN
PROCÉDÉS D'EXPÉRIENCE D'UTILISATION D'UN MOBILE SANS INTERRUPTION ENTRE UNE CARTE EXTÉRIEURE ET UNE CARTE INTÉRIEURE

(30) Priority: 13.08.2013 US 201313966195
(43) Date of publication of application: 22.06.2016
(73) Proprietor: Qualcomm Incorporated, San Diego, CA 92121-1714 (US)
(72) Inventor: MOHAMMAD MIRZAEI, Faraz, San Diego, CA 92121-1714 (US); DAS, Saumitra Mohan, San Diego, CA 92121-1714 (US); KHORASHADI, Behrooz, San Diego, CA 92121-1714 (US)
(74) Representative: Klang, Alexander H.
(86) International application number: PCT/US2014/050432
(87) International publication number: WO 2015/023544

(56) References cited:
- US-A1- 2007 001 904
- US-A1- 2009 216 438
- US-A1- 2010 146 436

## Description

### BACKGROUND

The present disclosure relates generally to map applications, and more specifically to techniques for a more seamless mobile user experience between outdoor and indoor maps.

Outdoor map applications are widely used in mobile device to provide navigation aid and location information to mobile users. The outdoor map application may be used in conjunction with satellite location services, such as Global Positioning System (GPS), to provide navigation aid. An outdoor map application typically has a database containing public streets and points of interest. Points on streets and points of interest may be encoded as geographic coded coordinates (e.g., with longitude and latitude).

However, an outdoor map application typically covers only public areas. Third-party venues, such as shopping centers, are typically not covered by the outdoor map application. An outdoor map application can normally display only public streets leading to entrances of a third-party venue. An outdoor map may be able to display only the outline of the entire third-party venue because the venue may be private property. Additionally, the roadways within the third-party venue are typically not known and hence not shown.

Furthermore, an indoor map of a given geographic area of interest (e.g., shopping centers) may then be generated by downloading the indoor third-party application associated with the given geographic area of interest.

Current implementations of map applications do not provide for smooth integration of indoor localization applications with an outdoor global map. US 2009/0216438 A1 provides for an integration of an indoor map into an outdoor map using one application for outdoor and indoor navigation.

### BRIEF SUMMARY

Certain embodiments are described that allow for a more seamless mobile user experience between outdoor and indoor maps. In some instances, when using a global outdoor map application, control of a polygonal subset corresponding to a venue (e.g., shopping center) can be given to a third-party application designed to provide localization and/or map services in the venue. For example, when a user touches the screen within the polygonal area on the touchscreen of the mobile device corresponding to the venue, the third-party application associated with the venue can be given control. In some instances, the polygonal subset can include a circular or partially circular shape. The polygonal subset can indicate the boundary of the venue, where the global outdoor map may not provide localization service. The third-party map application can be created by the venue-owner to provide localization and map services in the venue.

Methods, systems, computer-readable media, and apparatuses for integration of an outdoor map and an indoor map associated with a venue using a mobile device are presented. The method comprises steps according to claim 1.

In one or more arrangements, the first event can be a user input to select the venue performed on the mobile device.

In one or more arrangements, the first event comprises a zooming action resulting in a minimum portion of the presentation of the outdoor map with the overlaid indoor map being covered by the indoor map.

In one or more arrangements, the first event can be the mobile device being located inside the venue. Additionally, the first event can be detected based on location data associated with the indoor map application. Furthermore, the location data associated with the indoor map can include at least signal strength indication (RSSI) measurements or round-trip time (RTT) measurements received from one or more access points.

In one or more arrangements, the first event can be detected based on satellite location services of the mobile device.

In one or more arrangements, satellite location services of the mobile device can be disabled upon receiving indication of the mobile device being located inside the venue.

In one or more arrangements, one or more features associated with the indoor map application can be restricted upon receiving indication of the mobile device being located outside the venue.

In one or more arrangements, the indoor map application can be downloaded from an application store based on a user request. Additionally, the indoor map associated with the downloaded indoor map application.

In one or more arrangements, the method may further comprise receiving a second indication of a second event associated with outside the venue; and in response to receiving the second indication of the second event, allowing the indoor map application to relinquish control back to the outdoor map application.

In one or more arrangements, the second event can be the mobile device being located outside the venue.

In one or more arrangements, the second event can be the mobile device transitioning from inside to outside the venue.

In one or more arrangements, the second event can comprise a second user input to select the outside map performed on the mobile device.

In one or more arrangements, the indoor map application in parallel with the outdoor map application control the presentation of the outdoor map with the overlaid indoor map, upon receiving indication of the mobile device being located inside the venue.

Further, a mobile device configured to present an outdoor map integrated with an indoor map associated with a venue may comprise: memory; a receiver to receive data for presenting the outdoor map associated with an outdoor map application on the mobile device, wherein the outdoor map includes an area associated with the venue; and one or more processors configured to: overlay the indoor map on the area of the outdoor map associated with the venue, wherein the indoor map is associated with an indoor map application; receive a first indication of a first event associated with the venue; and in response to receiving the first indication of the first event, allow the indoor map application to control an aspect associated with the presentation of the outdoor map with the overlaid indoor map.

According to the invention, one or more computer-readable media storing computer-executable instructions for integrating an outdoor map and an indoor map are provided according to claim 14.

According to the invention, an apparatus for integrating an outdoor map and an indoor map associated with a venue is provided according to claim 15.

### BRIEF DESCRIPTION OF THE DRAWINGS

Aspects of the disclosure are illustrated by way of example. In the accompanying figures, like reference numbers indicate similar elements, and:
FIG. 1 is a graphical illustration of an example wireless network environment that can be employed in conjunction with the various systems and methods described herein.
FIG. 2 illustrates exemplary apparatuses of various embodiments.
FIG. 3 illustrates a simplified diagram of a map application that may incorporate one or more embodiments.
FIG. 4 illustrates a current implementation of an outdoor map application with a polygon indicating the boundary of a venue.
FIG. 5 illustrates the display of the map application on a mobile device, according to an embodiment.
FIG. 6 illustrates a user zooming on the map using map application, according to an embodiment.
FIG. 7 illustrates an example of when the map application mostly displays an indoor map application, according to an embodiment.
FIG. 8 illustrates a map application where the indoor localization capabilities have not been previously installed in the mobile device, according to an embodiment.
FIG. 9 illustrates an exemplary method for providing location services using a mobile device, according to some embodiments.
FIG. 10 illustrates an example of a computing system in which one or more embodiments may be implemented.

### DETAILED DESCRIPTION

Several illustrative embodiments will now be described with respect to the accompanying drawings, which form a part hereof. While particular embodiments, in which one or more aspects of the disclosure may be implemented, are described below, other embodiments may be used and various modifications may be made without departing from the scope of the disclosure.

The techniques described herein may be used for mobile device or client access to various wireless communication networks such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "networks" and "systems" are often used interchangeably. A CDMA network may implement a radio technology such as Universal Terrestrial Radio Access (UTRA), CDMA2000, etc. UTRA includes Wideband-CDMA (W-CDMA) and Low Chip Rate (LCR). CDMA2000 covers IS-2000, IS-95, IS-856 and High Rate Packet Data (HRPD) standards. A TDMA network may implement a radio technology such as Global System for Mobile Communications (GSM). An OFDMA network may implement a radio technology such as Evolved UTRA (E-UTRA), IEEE 802.11, IEEE 802.16, IEEE 802.20, Flash-OFDM®, etc. UTRA is part of Universal Mobile Telecommunication System (UMTS). Long Term Evolution (LTE) is a radio access technology used by E-UTRA. UTRA, E-UTRA, GSM, UMTS and LTE are described in documents from an organization named "3rd Generation Partnership Project" (3GPP). CDMA2000 is described in documents from an organization named "3rd Generation Partnership Project 2" (3GPP2). IEEE 802.11 networks are also known as WiFi networks or wireless local area networks (WLANs) and are defined in a family of standards from the Institute of Electrical and Electronics Engineers (IEEE). These various radio technologies and standards are known in the art.

Various embodiments are described herein in connection with an access terminal. An access terminal can also be called a system, subscriber unit, subscriber station, mobile station, mobile, remote station, remote terminal, mobile device, user terminal, terminal, wireless communication device, user agent, user device, user equipment (UE). An access terminal can be a cellular telephone, a cordless telephone, a Session Initiation Protocol (SIP) phone, a wireless local loop (WLL) station, a personal digital assistant (PDA), a handheld device having wireless connection capability, a computing device, a smartphone, a tablet, a laptop or other processing device connected to or containing a modem, for example a wireless modem. Moreover, various embodiments are described herein in connection with a base station. A base station can be utilized for communicating with access terminal(s) and can also be referred to as an access point, Node B, Evolved Node B (eNodeB), access point base station, a Wi-Fi access point, a Femtocell, a Home Base Station, a Home Node B, a Home evolved Node B or some other terminology.

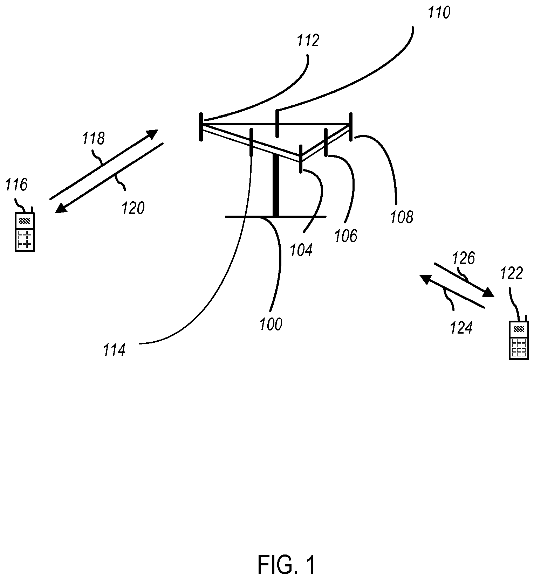

Referring to FIG. 1, a multiple access wireless communication system according to some embodiments is illustrated. In one embodiment, an access point (AP) 100 includes multiple antenna groups, one including 104 and 106, another including 108 and 110, and an additional including 112 and 114. In FIG. 1, only two antennas are shown for each antenna group; however, more or fewer antennas may be utilized for each antenna group. For example, only one or two total antennas may be included or attached to the AP 100. Access terminal 116 (AT) is in communication with antennas 112 and 114, where antennas 112 and 114 transmit information to access terminal 116 over forward link 120 and receive information from access terminal 116 over reverse link 118. Examples of ATs may include mobile phones, PDAs, wireless tablets, and the like. Access terminal 122 is in communication with antennas 106 and 108, where antennas 106 and 108 transmit information to access terminal 122 over forward link 126 and receive information from access terminal 122 over reverse link 124. In a Frequency Division Duplex (FDD) system, communication links 118, 120, 124 and 126 may use different frequencies for communication. For example, forward link 120 may use a different frequency than that used by reverse link 118.

The system in FIG. 1 may support operation on multiple carriers (waveform signals of different frequencies). Multi-carrier transmitters can transmit modulated signals simultaneously on the multiple carriers. The signal may follow one or more standards such as a Code Division Multiple Access (CDMA) signal, a Time Division Multiple Access (TDMA) signal, an Orthogonal Frequency Division Multiple Access (OFDMA) signal, a Single-Carrier Frequency Division Multiple Access (SC-FDMA) signal, Long Term Evolution, WiFi, etc. Each modulated signal may be sent on a different carrier and may carry pilot data, overhead information, data, etc.

Each group of antennas and/or the area in which they are designed to communicate may be referred to as a sector of the access point. In the embodiment, antenna groups each are designed to communicate to access terminals in a sector of the areas covered by access point 100.

In communication over forward links 120 and 126, the transmitting antennas of access point 100 may utilize beamforming in order to improve the signal-to-noise ratio of forward links for the different access terminals 116 and 122. Also, an access point using beamforming to transmit to access terminals scattered randomly through its coverage may cause less interference to access terminals in neighboring cells than an access point transmitting through a single antenna to all its access terminals. In some embodiments, beamforming is not performed.

Other access points or transmitting stations may be employed. For example, a base station may be used in addition to or instead of the AP 100. In some embodiments, a first transmitter such as the AP 100 may provide access to a first network while a second transmitter, for example a cellular base station, may provide access to a second network. In some embodiments, the areas in which each of the first transmitter and second transmitter may be accessed overlap.

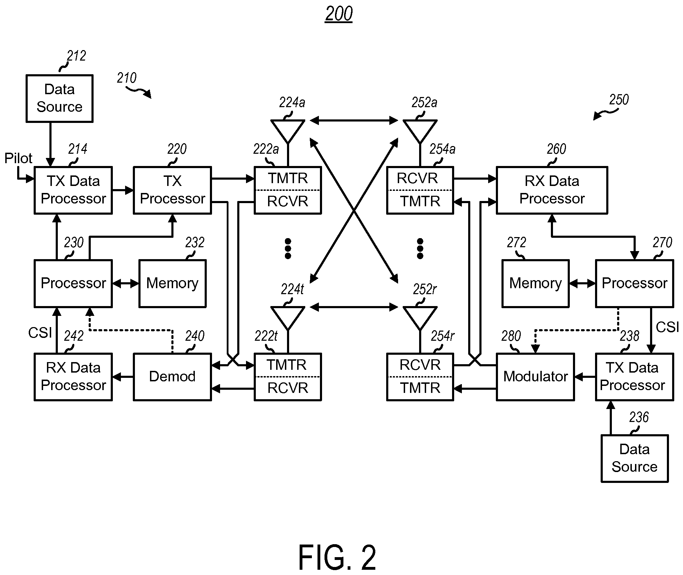

FIG. 2 is a block diagram of an embodiment of a transmitter system 210 (which may, for example, implement the access point 100) and a receiver system 250 (which may, for example, implement the access terminal 116) in a communication system 200.

At the transmitter system 210, traffic data for a number of data streams is provided from a data source 212 to a transmit (TX) data processor 214. In some embodiments, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QSPK, M-PSK, or M-QAM) selected for that data stream to provide modulation symbols. The data rate, coding, and modulation for each data stream may be determined by instructions performed by processor 230. The instructions can be stored in memory 232.

The modulation symbols for all data streams are then provided to a TX processor 220, which may further process the modulation symbols (e.g., for OFDM). TX processor 220 then provides NT modulation symbol streams to NT transmitters (TMTR) 222a through 222t. In certain embodiments, TX processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and up converts) the analog signals to provide a modulated signal suitable for transmission over the channel. NT modulated signals from transmitters 222a through 222t are then transmitted from NT antennas 224a through 224t, respectively.

At receiver system 250, the transmitted modulated signals are received by NR antennas 252a through 252r and the received signal from each antenna 252 is provided to a respective receiver (RCVR) 254a through 254r. Each receiver 254 conditions (e.g., filters, amplifies, and down-converts) a respective received signal, digitizes the conditioned signal to provide samples, and further processes the samples to provide a corresponding "received" symbol stream.

An RX data processor 260 then receives and processes the NR received symbol streams from NR receivers 254 based on a particular receiver processing technique to provide NT "detected" symbol streams. The RX data processor 260 then demodulates, deinterleaves, and decodes each detected symbol stream to recover the traffic data for the data stream. The processing by RX data processor 260 is complementary to that performed by TX processor 220 and TX data processor 214 at transmitter system 210. The data can be stored in memory 272.

A processor 270 periodically may determine which pre-coding matrix to use. Processor 270 may formulate a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210. Two or more receiver, transmitter, and antenna groups may be configured to access separate networks, for example a WLAN network and an LTE, WCDMA, or cdma2000 HPRD network. In some embodiments, a single receiver, transmitter, and antenna group may be configured to access at least two separate networks. Similarly, a plurality of processors may be included to process communications and/or data for a plurality of networks. Further, a single processor may be configured to process communications and/or data for a plurality of networks.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights, then processes the extracted message.

In some instances, third-parties (e.g., venue-owners) may not be willing to share their maps and assistance data with global outdoor localization service providers, since the third-parties may not receive share of advertisement revenue. Consequently, venue-owners may create customized indoor localization and map applications for their corresponding venue.

Furthermore, outdoor and indoor localization can use different technologies and the logic can be implemented by different applications. For example, GPS-based technologies can be used for outdoor localization, while, for indoors, localization can be based on received signal strength indication (RSSI) and/or round-trip time (RTT) measurements from AP 100. Receiver system 250 and transmitter system 210 of a mobile device can be utilized to communicate with AP 100 to obtain RSSI and/or RTT measurements. Additionally, indoor localization can include floor determination.

Techniques for providing appearance of seamless integration of outdoor and indoor third-party localization are described herein. According to some embodiments, a composite map may be generated by combining an outdoor map for public areas with an indoor map for a third-party venue (e.g., shopping center). The composite map can provide localization and map services for both the indoor and outdoor map. Additionally, when a user is interacting with locations outside of the venue, control can be given to the outdoor map application. Alternatively, when a user is interacting within a polygonal subset of the map associated with the venue, control can be given to a third-party application designed to provide localization and map services in the venue.

For example, when a user taps the polygon area corresponding to the venue on the touchscreen or display of the mobile device, the third-party application associated with the venue can be given control. A polygon can indicate the boundary of the venue, where the global outdoor map may not provide localization service. Outdoor map providers can create such polygons via computer vision techniques. The third-party application can be created by the venue-owner to provide localization and map services in the venue. In some instances, a polygonal subset may not be only connected straight lines and can include a circular or partially circular shape.

In one or more arrangements, control to a third-party application can include, but not be limited to any user feedback within the polygonal area is directly conveyed to the third-party application. Touching/taping the screen, double tapping the screen, and zooming in/out are examples of user feedback. Additionally, in the case of zooming in and out, user feedback can be relayed to the global map in parallel. Furthermore, an additional aspect of control can include the area of the screen display that is controlled by the third-party application (e.g., what the application displays on the screen). Moreover, the third party application can decide what is shown and what is hidden from the user within the polygonal area (e.g., area of the screen display that is controlled by the third-party application).

Accordingly, some embodiments of the present invention allow for a uniform integrated system for interfacing and accessing all localization and location-based applications for a mobile device. By removing the need to switch between multiple applications in order to perform localization in different areas (e.g., outdoors, indoor venues), embodiments of the present invention can inform users that the target venue has a designated localization application (e.g., indoor map application) which provides more detailed information.

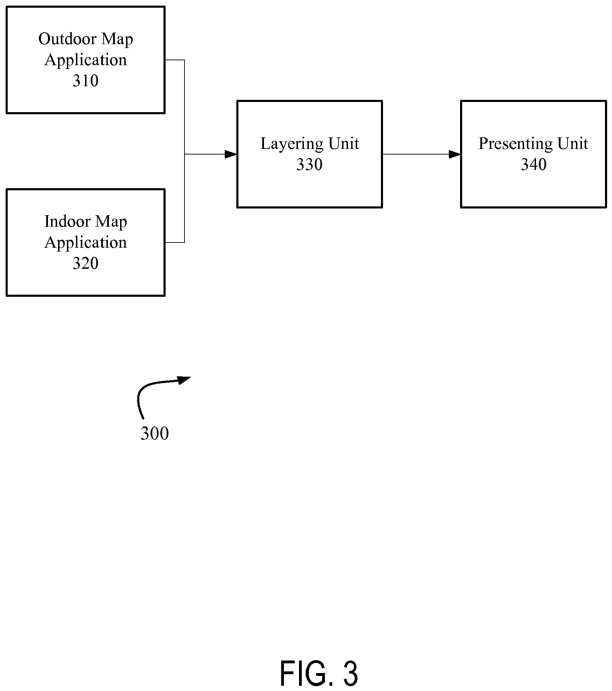

FIG. 3 illustrates a simplified diagram of map application 300 that may incorporate one or more embodiments. FIG. 3 shows a design of map application 300 capable of providing map services and localization for outdoor maps (e.g., global public maps) and indoor maps (e.g., third-party venues). Within map application 300, an outdoor map application 310 may include map services for a global outdoor map (e.g., public streets, points of interest). Outdoor map application 310 may be similar to those found in commercially available global mapping or navigation systems.

In general, map application 300 may include all or a subset of the units shown in FIG. 3 and/or other units not shown in FIG. 3. For example, map application may be implemented on the network side and may include outdoor map application 310, indoor map application 320, and layering unit 330 in FIG. 3, but may exclude presenting unit 340. Map application 300 may generate composite maps and/or localization services for users using mobile devices.

Map application 300 can provide location and map services for public areas as well as third-party venues. In some instances, outdoor map application 310 may be a commercially available mapping application, which may display large geographic area such as the entire world. For example, outdoor map application 310 may show graphical rendition of geo-coded roadways in public areas. The roadways may include roads, alleys, etc. In some instances, no information or map data is available in the outdoor map application for private third-party venues. Consequently, a user would not receive location and map services support within the third-party venue using only the outdoor map application.

An indoor map application 320 may include localization information and map services for third-party venues (e.g., private premises). In general, a third-party venue may cover any geographic area that is not covered by commercially available outdoor mapping services. A third-party venue may cover a shopping center, a large office complex, a warehouse distribution center, a college, a theme park, a gated community, etc.

Additionally, indoor map application 320 may display information (e.g., geo-coded coordinates) to the user. This information may be provided by owners of the private venues or may be obtained by downloading a third-party application from an application store. The map format may be the same as or different from the outdoor map format. In one design, the indoor map may show a graphical rendition of roadways in a third-party venue (e.g., in the same map format as the outdoor map format). In another design, the indoor map may be a geo-coded aerial map of the third-party venue. In yet another design, the indoor map may show a combination of a graphical rendition of roadways and a geo-coded aerial map (e.g., with the roadways superimposed over the aerial map). The aerial map may be a satellite image or some other image and may show roadways, natural terrain, and other structures within the third-party venue.

A layering unit 330 may receive information from outdoor map application 310 and indoor map application 320, and may combine the two maps by overlaying the indoor map on top of the outdoor map to obtain a composite map. The composite map can be created in real-time. Additionally, there may be a conflict in the overlap when the indoor map is superimposed on top of the outdoor map. For example, when the outdoor map shows the venue to be rectangular, whereas the indoor map shows the venue to be a trapezoid. In the preferred embodiment, the indoor map may take precedence over the outdoor map. Alternatively, in another embodiment, the outdoor map may take precedence over the indoor map.

The composite map from layering unit 330 may include overlaying both: roadways in public areas from the outdoor map application 310; and roadways and/or a geo-coded aerial map of third-party venues from the indoor map application 320. Layering unit 330 may overlay a graphical map and an aerial map (e.g., a satellite image) using any commercially available technology that can calibrate an aerial image and roadways.

A presenting unit 340 may present (e.g., display) the composite map on the mobile device. All of the units in map application 300 may operate in real time and may generate maps when they are requested (e.g., by user of the mobile device).

As previously mentioned, in current implementations, smooth integration of indoor localization applications with an outdoor global map is challenging. In some instances, many venue-owners (e.g., indoor map applications) are not willing to share their maps and assistance data with global localization service providers (e.g., outdoor map applications), since the venue-owners do not receive a share of advertisement revenue. Consequently, each venue-owner may create its own indoor localization and map application for mobile devices.

Assistance data can include, but is not limited to, data used for determining the position of a mobile device (e.g., access terminal 116) and/or APs 100. For example, venue owners may have better knowledge of network (e.g. better knowledge of the locations and transmission characteristics of APs 100) and thus may be better able to (i) provide location assistance data related to acquiring and measuring radio signals from network, (ii) compute an accurate location using such measurements and/or (iii) provide assistance data to the mobile device (e.g., access terminal 116) enabling the mobile device to compute such a location by itself.

Additionally, assistance data from the indoor map application can help calculation of mobile position using satellite location services by the outdoor map application. For example, assistance data can be used to acquire satellites more quickly, enabling the GPS receiver to lock to the satellites more rapidly in some cases.

In current implementations, the outdoor global map may not have the capacity to display the indoor map of the area of interest (e.g., shopping center) and also may not be able to provide localization services with sufficient accuracy once a user is inside the area of interest. This may be a result of the third-party associated with the area of interest to not provide or not authorize the outdoor global map to provide localization within the area of interest. Therefore, a user may have to download the third-party indoor map application directly from the application store and install the application on a mobile device.

Additionally, outdoor localization and indoor localization use different technologies and the logic can be implemented by different applications. For example, while GPS-based technology can be used by outdoor map application 310, and indoor map application 320 can provide localization services based on RSSI and/or RTT measurements from APs 100 are used. As a result, in current implementations, users have to manually switch between applications to perform localization, explore building directories, or use location-based services in outdoor environments or within various venues.

In contrast, embodiments of the present invention can offer a uniform and integrated method for interfacing and accessing all localization and location-based applications from mobile devices.

According to some embodiments, the map application 300 can integrate various indoor localization applications with an outdoor global map. In current implementations, a global map can display to a user the outside of a venue (e.g., building) without internal details of the venue. A user may have to switch to indoor localization applications to get more information about the venue. The map application 300 can seamlessly integrate the outdoor map with the indoor localization application to enhance users' experience.

As previously mentioned, a third-party vendor that has created indoor map application 320 (e.g., indoor localization application) may be hesitant in providing the application to a commercially-available global map application. The third-party vendor may want users to interact directly with their own application. According to some embodiments, map application 300 can give control to the third-party vendor's indoor localization application, such that user's interactions are directed through the third-party vendor's own servers. By giving control directly to the indoor map application, third-party vendors can collect advertisement revenues directly.

According to some embodiments, a user can use an outdoor global map and zoom into the polygonal area that is associated with an area of interest (e.g., shopping center). When a user zooms into the polygonal area associated with the area of interest, map application 300 can provide localization services and map services within the area of interest by allowing (e.g., relinquishing) control directly to the third-party indoor map application 320 that is associated with the area of interest. Alternatively, many other user inputs (e.g., tap, voice command, selection of an icon) can indicate to the map application 300 that user request access to the indoor map application 320, which can result in the map application 300 allowing the indoor map application to control an aspect associated with the presentation (e.g., display) of the indoor map.

In addition, in response to receiving a second user input associated with outside the venue, map application 300 can allow the indoor map application 320 to relinquish control back to the outdoor map application 310.

For example, map application 300 can relinquish control to the indoor map application 320 when a user is interacting within the polygonal area associated with the venue. Alternatively, when the user is not interacting within the polygonal area within the polygonal area associated with the venue, control can be given to the global outdoor map.

According to one embodiment, the polygonal area within which the information that is being shown is provided by the indoor localization engine vendor. For example, a shopping center associated with the polygonal area may have its own indoor localization application which can be layered on top of a global outdoor map.

Therefore, within the polygonal area of the shopping center, the localization is performed not by the global map application, but instead by the third-party indoor map application associated with the shopping center. Furthermore, the indoor map application 320 can use a different technology (e.g., RSSI or RTT measurements) in comparison with the outdoor map application 310 (e.g., GPS). Map application 300 can provide a layer of interaction for a third-party indoor map application within a global map engine.

In one or more arrangements, map application 300 relinquishes control to the outdoor global map application but, when user zooms into the polygonal area corresponding to an area of interest, the controls are given to the third-party indoor map application that is associated with the area of interest. Map application 300 can direct the input (e.g., click-through) of the user to be sent to the servers associated with the indoor map application, when the user enters the polygonal area.

Additionally, the indoor map application can have vendor-specific information to perform localization, such as, but not limited to, the Wi-Fi signature from receiver system 250 and transmitter system 210, AP 100 locations, and internal map of the facilities. Therefore, the venue owners may not be willing to share this sensitive additional information to the global outdoor map owners.

In outdoor localization, GPS-based technology along with assistance data can be one method of providing localization information. For example, assistance data can be received from AP 100, routers, and/or other mobile devices. Assistance data can allow for faster and more accurate location determination than using GPS alone. Additionally, assistance data for indoor localization can include the signature of RSSI/RTT measurements in different locations (e.g., using a heatmap).

In indoor localization, there can be several different methods that are not based on GPS. In some instances, there may be weak GPS reception in buildings. Therefore, RSSI or RTT measurements can be utilized to determine the geographic location of a user within the building. By using different mechanisms (e.g., GPS, RSSI/RTT measurements) to determine the location of a user based on the current location of the user, map application 300 can seamlessly provide better location data to the user.

Therefore, different localization methods can be used when transitioning from an outdoor location to an indoor location. Based on the received data and user input, map application 300 can use the correct localization methods to determine the location of the user. For example, map application 300 can seamlessly determine that a user has entered a shopping mall, and therefore uses indoor localization techniques and/or uses the indoor map application associated with the shopping mall. For example, by specifying a polygonal perimeter around the indoor venue and using GPS data, map application can determine that the user has entered the polygonal perimeter of the indoor venue, and therefore the map application 300 can give the controls to the indoor localization system. Alternatively, when map application 300 has determined that the user is exiting the polygonal perimeter of the indoor venue, the map application can pass the controls to the outdoor localization system.

According to another embodiment, map application can determine control based on user's input. For example, when the user's input is associated with the indoor venue, map application 300 can give control to the indoor map application application 320. Futhermore, when the user's input is associated with a location outside the venue; indoor map application 320 can relinquish control back to outdoor map application 310.

According to another embodiment, the indoor localization system and the outdoor localization system can run in parallel. Both localization systems can be used in parallel when the user is in the vicinity of the building for a more accurate location determination. Additionally, when both localization systems are used in parallel, map application 300 can use the more accurate measurements from either system. For example, if the more accurate measurements determine that the user is within the building, then map application 300 can present to the user the information that is provided by the more accurate localization system.

Additionally, the indoor localization system can determine the floor that the user is on. Map application 300 can present (e.g., display) different floor maps (e.g., maps of different floor in a shopping mall) based on the floor determination.

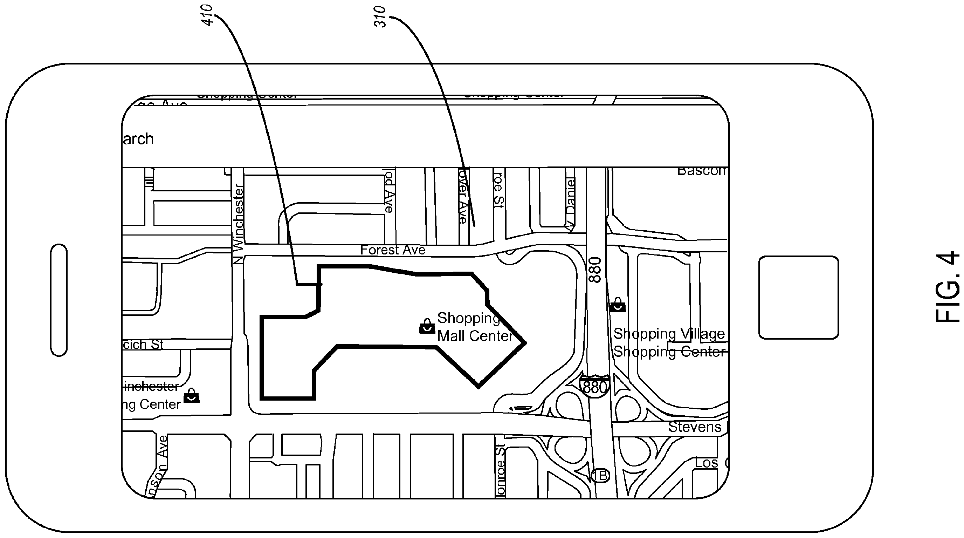

FIG. 4 illustrates a current implementation of an outdoor map application with a polygon indicating the boundary of a venue. For example, outdoor map providers can obtain the polygonal areas indicating the boundary of venues using computer vision techniques. In current implementations, a global outdoor map application can display the polygonal subset indicating the boundary of the venue, but the global outdoor map application cannot provide localization services for reasons as previously discussed. Therefore, when a user tries to zoom in on the venue, the outdoor map application cannot provide additional information. As a result, in current implementations, a user may have to separately download and use the third-party indoor application to get localization and map services inside the venue.

As illustrated in FIG. 4, current implementations of outdoor map application 310 (e.g., global map application) have a polygon 410 indicating the boundary of the venue, and the global map applications do not provide localization service for the venue.

In contrast, according to some embodiments, map application 300 can give the control of a polygonal subset of the display or touchscreen area (e.g., area corresponding to the indoor venue) to the third-party application, designed to provide localization/map services in the indoor venue. Map application 300 can seamlessly give the control of the polygonal subset of the display or touch screen area to the third-party indoor application that is designated to provide localization or map services within that polygonal area.

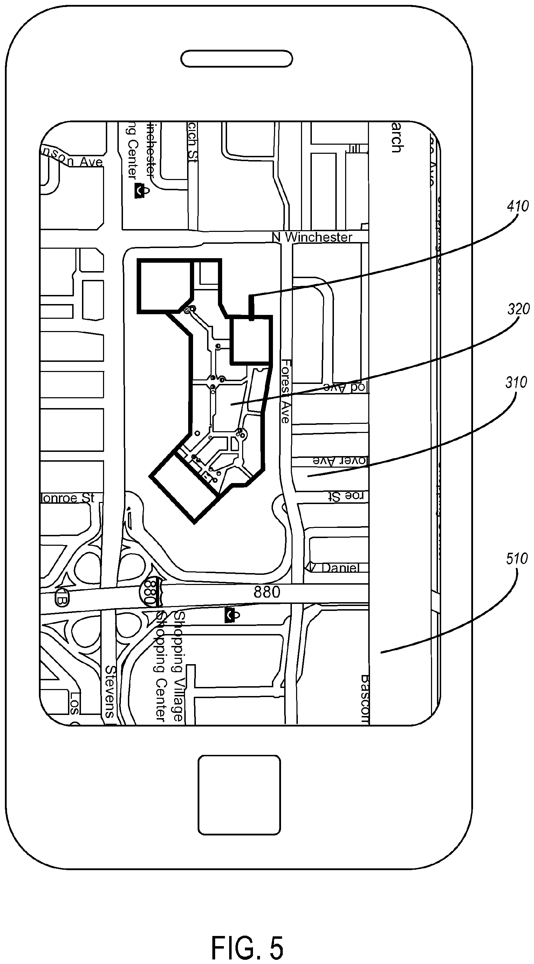

FIG. 5 illustrates the display of the map application 300 on a mobile device, according to an embodiment. The outdoor map application 310 can give access and control of the venue within the polygon 410 to the indoor map application 320. For example, the indoor map application 320 controls the area of the touchscreen within the polygon 410. All user inputs (e.g., clicks, touch-screen inputs, voice commands) entered through or associated with polygon 410 are relayed to the indoor map application 320 (e.g., third-party vendor application). This allows third-party vendors to collect click-through revenue. The outdoor map application 310 may also display relevant applications and collect revenue. Map application 300 can give access and control of the polygon to the third-party indoor application.

As illustrated in FIG. 5, the polygonal area can have an internal map of the venue. The indoor content within the polygonal area can be provided by the third-party vendor and the outdoor map application may not have any control within the polygonal area. Therefore, any input that the user enters within the polygonal area can be relayed directly to the indoor localization application vendor. By giving direct access to the third-party application, the third-party vendor can collect advertisement revenues and does not need to share its proprietary information with the outdoor map application.

In some instances, using map application 300, a user can use the search box 510 to search within the outdoor map application and the indoor map application. Alternatively, based on a user's input, the user can determine which application to make the search box 510 active on. For example, by clicking within the polygon 410, the search box 510 can be active for the indoor map application 320. In another example, by clicking outside of the polygon 410, the search box 510 can be applicable for the outdoor map application 310.

Additionally, in some instances, the outdoor map application can also display relevant applications and collect revenue. For example, during a search request, the outdoor and/or indoor map application can display relevant coupons and applications for specific venues and collect advertisement revenues.

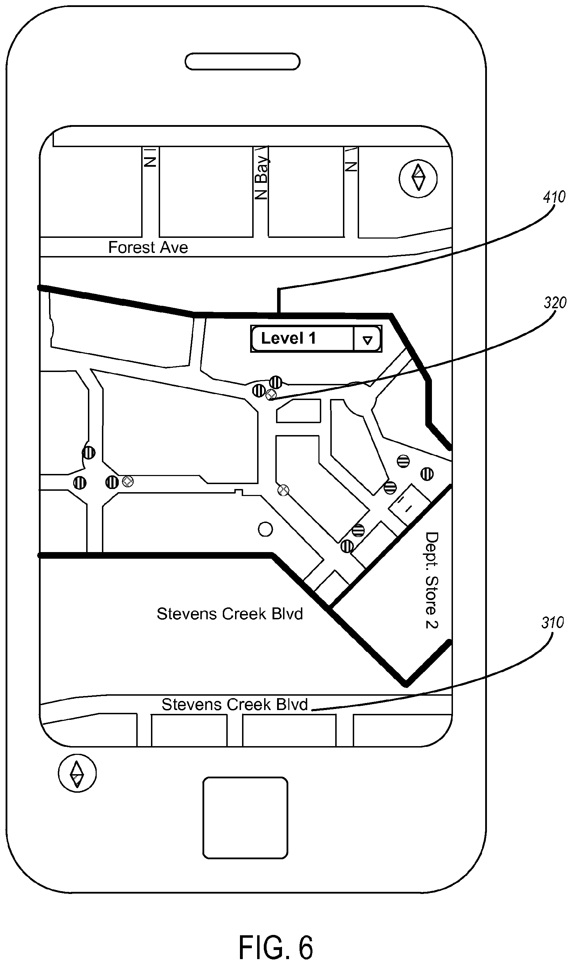

FIG. 6 illustrates a user zooming on the map using map application 300, according to an embodiment. As the user zooms through the global map, an increasingly larger portion of the display/touchscreen is taken over by the indoor map application 320. In some embodiments, when the display of the indoor map application 320 is greater than a minimum proportion (e.g., 50%), then the control of map application 300 is given to the indoor map application 320. Additionally, the indoor map application 320 may have interactive communication with the user, including through advertisements (e.g., coupons), links to external vendor websites, and icons (e.g., a menu for selecting a store, directory) for showing map information. Furthermore, map application 300 can present (e.g., display) a drop-down menu to allow a user to select a floor in the venue. Map application 300 can relay the user's selection to the indoor map application in order for the indoor map application to present a selected floor. Alternatively, the floor determination can automatically be made by the indoor localization application based on received localization data (e.g., RSSI/RTT or barometer measurements).

Moreover, based on the user's location and/or floor determination, the indoor localization application can determine specific information (e.g., map services, advertisement) to send to the user or restrict user's access to some services (e.g., emergency exits). For example, the map application may display a menu icon along with the indoor map, and a user can click on the menu to get more information and coupons only if the user is within the venue.

According to another embodiment, map application 300 can send indoor information (e.g., interactive features, interactive communication) to a user located outside the venue. For example, the level selector menu can be available to the user although the user is located outside of the venue. In some instances, a user can zoom near the venue (e.g., shopping mall), which can result in map application 300 presenting a menu to allow a user to select a floor of the shopping mall to browse.

As illustrated in FIG. 6, embodiments of the present invention allow for seamless integration when zooming between the maps. As the user zooms through the global map, an increasingly larger portion of the display or touchscreen is taken over by the indoor map application 320. Note that the indoor map application 320 may have interactive communication with the user, including through advertisements, links to external vendor websites, and icons for showing more information within the composite map. The indoor map application 320 may provide a floor selector menu for users accessing map application 300 from outside of the venue (i.e., for browsing users). When the user sufficiently zooms into the outdoor map, such that the venue comprises most of the visible content, the control of the entire screen is taken over by the indoor map application 320, which may provide the user with additional options and information. In such an instance, the outdoor map application may be put in sleep mode in this case to save power and CPU cycles. For example, the map application can disable the GPS receiver to save battery power.

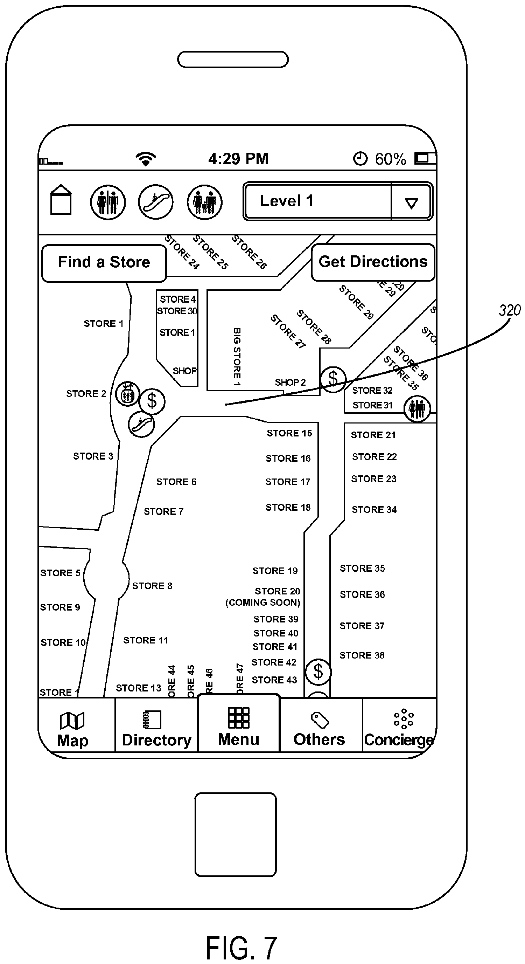

FIG. 7 illustrates an example when the map application 300 mostly presents indoor map application 320, according to an embodiment. In some instances, the indoor map has mostly taken over the display screen of the mobile device. For example, when the user sufficiently zooms into the outdoor map, such that the venue comprises most of the visible content, the control of the entire screen can be taken over by the indoor map application 320. In this embodiment, map application 300 can provide the user with additional options and information. Additionally, the global outdoor map service may be put in sleep mode in this embodiment to save power and CPU cycles.

Furthermore, in one or more arrangements, map application 300 can present the content and give control to the indoor map application 320 using either a browse mode or a localization mode.

In the browse mode, the user may not be in the target venue, but may want to browse the indoor map, by zooming into the area where the venue is located. The indoor map application 320 is initiated once the outdoor map application 310 has been zoomed-in beyond a predetermined threshold. The user may be provided with options to manually select the floor of interest for multi-floor venues.

In the browse mode, the indoor map application 320 can be utilized by the map application 300, when a user zooms-in on the global outdoor map beyond a predetermined threshold. A threshold can include when the indoor venue has taken up a certain percentage (e.g., above 50%) of the display screen. For example, as user zooms-in and the indoor venue is sufficiently displayed, map application 300 takes control away from the outdoor map and gives control over part of the screen that is occupied by that polygon. Additionally, the user may be provided with options to manually select the floor of interest for multi-floor venues.

Furthermore, the venue owners may restrict the information provided in this mode for privacy or security reasons. The indoor map application can have two versions of the indoor map, where the more detailed version is given to a user once the user is inside the venue. For example, the location of an ATM may not be provided to users who are actually outside the venue. The venue-owner may prefer to provide other venue-specific information (e.g., coupons, advertisement) once users are actually within the venue.

In the localization mode, the user is located in or near the target venue. As a result of the user's location, map application 300 can allow the indoor map application 320 to control an aspect associated with the presentation of the indoor map. Additionally, the indoor map can be zoomed-in on the display of the mobile device based on the detemination that the user is located in or near the venue. Furthermore, the floor may be automatically detected by the third-party application.

Additionally, the localization mode can be launched when the user is either inside, near or entering the target venue. In the localization mode, map application 300 can present the indoor map, and allow the indoor map application 320 to control an aspect of the presentation of the map. As previously mentioned, the floor that the user is located on may be automatically detected by the indoor map application 320. Therefore, part of the indoor localization engine may be to automatically determine the floor that the user is located on, and the corresponding floor map of the venue can be displayed on the mobile device.

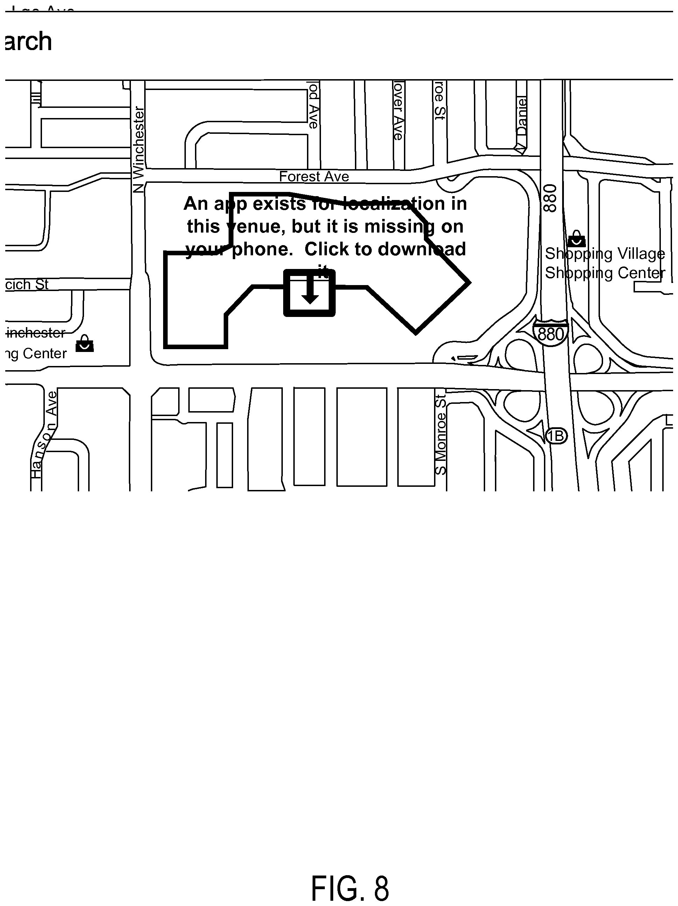

FIG. 8 illustrates map application 300 where the indoor localization capabilities have not been previously installed in the mobile device, according to an embodiment. In some instances, when map application 300 is zoomed into an area with venues whose third-party location service provider is missing, map application 300 may inform the user about the missing indoor map application 320, and upon a request from the user, download the relevant indoor map application 320 from the application store. Alternatively, indoor map application 320 can download the relevant third-party application without a request from the user.

Map application 300 can determine available indoor map applications (e.g., third-party applications) based on a database. The database can provide available third-party applications for map and localization services to the global or outdoor map vendors. For example, a venue-owner can register the indoor localization application with a global map service provider.

According to some embodiments, map application 300 can allow users to use multiple map applications without needing to switch between applications. Map application 300 can allow users to receive personal localization information in indoors and outdoors areas. In current implementations, different map applications may have conflicts of interest with each other and therefore may not share information with each other. By giving control to each indoor and outdoor map application based on triggers previously discussed, map application 300 can allow for a better user experience by using different indoor and outdoor map application side-by-side. Additionally, map application 300 can inform users if a target venue has a designated localization application that can provide more accurate information about the venue.

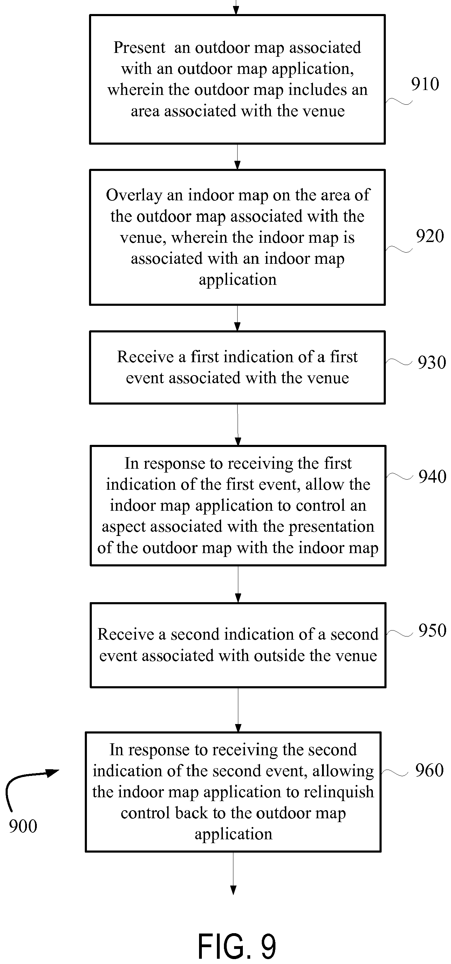

FIG. 9 illustrates an exemplary method 900 for integration of an outdoor map and an indoor map associated with a venue using mobile device, according to some embodiments.

At 910, a mobile device using map application 300 can present an outdoor map associated with an outdoor map application 310, where the outdoor map includes an area associated with the venue. In some instances, presenting can include displaying the outdoor map associated with an outdoor map application 310 on the display of the mobile device. Furthermore, presenting can also include displaying the outdoor map on other surfaces (e.g., clothes, glasses, wall). For example, the indoor and outdoor maps can be integrated and presented on a pair of glasses (e.g., head-mounted display (HMD)). Additionally, presenting may also include sound or other sensory feedbacks (e.g., vibration) as well. For example, map application 300 may be able to provide turn-by-turn voice navigation, or provide an alert (e.g., vibration, sound) if the wrong path is taken. Another example of presenting can include voice description of the area. Moreover, presenting can include a text to speech interface (e.g., verbal indications for visually-impaired users).

The exemplary figure illustrated by FIG. 5 can be an example of map application 300 presenting (e.g., displaying) the outdoor map associated with outdoor map application 310 and polygon 410. As previously mentioned, the polygonal area can be the perimeter for the third-party venue. In some embodiments, the mobile device at 910 is implemented by the receiver system 250. For example, receiver system 250 can receive data for displaying the outdoor map associated with the outdoor map application. In such embodiments, at least portions of 910 may be performed, for example, by the transceiver 252-e.g., in combination with the modulator 280-and/or one or more of the processors 238, 260, and 270-e.g., in combination with information and/or instructions from the data source 236 and/or memory 272.

At 920, the mobile device using map application 300 can overlay the indoor map on the area of the outdoor map associated with the venue, wherein the indoor map is associated with an indoor map application 320. The exemplary figure illustrated by FIG. 5 can be an example of map application 300 presenting (e.g., displaying) indoor map application 320 within polygon 410. In some embodiments, the mobile device is implemented by the processors 238, 260, and 270-e.g., in combination with information and/or instructions from the data source 236 and/or memory 272. According to one embodiment, the indoor map may have been previously downloaded and stored in the memory 272 of mobile device. In addition, using instructions from the data source 236, the processors 238, 260, and 270 can overlay the indoor map on the area of the outdoor map associated with the venue. In such embodiments, at least portions of 920 may be performed, for example, by the transceiver 252-e.g., in combination with the modulator 280.

At 930, the mobile device using map application 300 can receiving a first indication of a first event associated with the venue. For example, the first event associated with venue can include a user input (e.g., click, touch-screen input, voice command) entered through or associated with polygon 410. For example, user can touch the touchscreen display of mobile device inside the polygonal area associated within the venue. Alternatively, user input can include voice command associated with the venue (e.g., user saying the name of the venue). In such embodiments, at least portions of 930 may be performed, for example, by the processors 238, 260, and 270-e.g., in combination with information and/or instructions from the data source 236 and/or memory 272. In such embodiments, at least portions of 930 may be performed, for example, by the transceiver 252-e.g., in combination with the modulator 280.

At 940, in response to receiving the first indication of the first event, the mobile device using map application 300 can allow the indoor map application 320 to control an aspect associated with the presentation of the outdoor map with the overlaid indoor map. As previously discussed, by allowing the indoor map application to control an aspect of the presentation, the first event (e.g., user input) associated with the indoor map application can be sent to the indoor map application 320 (e.g., third-party vendor application). This allows third-party vendors to collect advertisement revenues. In such embodiments, at least portions of 930 may be performed, for example, by the processors 238, 260, and 270-e.g., in combination with information and/or instructions from the data source 236 and/or memory 272. In such embodiments, at least portions of 920 may be performed, for example, by the transceiver 252-e.g., in combination with the modulator 280.

For example, by allowing indoor map application 320 to control an aspect of the presentation, the presenting unit 340 in FIG. 3 of map application 300 can be updated based on the data received from indoor map application 320. The data received from indoor map application 320 can be based on the first event at 930 and the response at 940. According to another embodiment, the presenting unit 340 can be updated based on information received from outdoor map application 310 in response to the first event at 930 and 940 and/or data received from indoor map application 320 at 930 and 940.

Additionally, presenting the map could be more than just visual display. According to some embodiments, the response at 940 may include sound or other sensory feedbacks (e.g., vibration) as well. For example, the indoor application may be able to provide turn by turn voice navigation, or provide an alert (vibration or sound) if the wrong path is taken. Therefore, according to some embodiment, the display of the map application can include voice and vibrations, such as voice navigation.

Optionally at 950, the mobile device using map application 300 can receive a second indication of a second event associated with outside the venue. For example, user input associated with the second event can include user input (e.g., click, touch-screen input, voice command) entered through or associated with outside the polygon 410. In such embodiments, at least portions of 930 may be performed, for example, by the processors 238, 260, and 270-e.g., in combination with information and/or instructions from the data source 236 and/or memory 272. In such embodiments, at least portions of 920 may be performed, for example, by the transceiver 252-e.g., in combination with the modulator 280.

Optionally at 960, in response to receiving the second indication of the second event, the mobile device using map application 300 can allow the indoor map application 320 to relinquish control back to the outdoor map application 310. As previously discussed, user input associated with the outdoor map can be sent to the outdoor map application 310. In such embodiments, at least portions of 940 may be performed, for example, by the transceiver 252-e.g., in combination with the modulator 280-and/or one or more of the processors 238, 260, and 270-e.g., in combination with information and/or instructions from the data source 236 and/or memory 272.

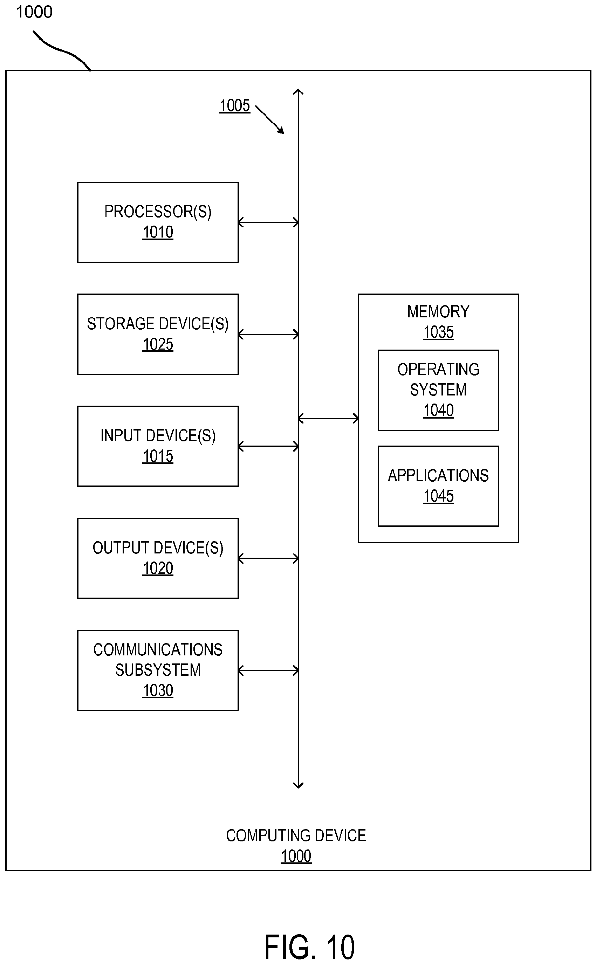

An example of a computing system in which various aspects of the disclosure may be implemented is now described with respect to FIG. 10. The computing system may exemplify mobile device using map application 300 as referenced herein. According to one or more aspects, a computer system as illustrated in FIG. 10 may be incorporated as part of a computing device, which may implement, perform, and/or execute any and/or all of the features, methods, and/or method steps described herein. For example, computer system 1000 may represent some of the components of a hand-held device. A hand-held device may be any computing device with an input sensory unit, such as a camera and/or presenting unit 340. Examples of a hand-held device include but are not limited to video game consoles, tablets, smart phones, and mobile devices. In one embodiment, the system 1000 is configured to implement the method 900 described in FIG. 9. FIG. 10 provides a schematic illustration of one embodiment of a computer system 1000 that can perform the methods provided by various other embodiments, as described herein, and/or can function as the host computer system, a remote kiosk/terminal, a point-of-sale device, a mobile device, a set-top box, and/or a computer system. FIG. 10 is meant only to provide a generalized illustration of various components, any and/or all of which may be utilized as appropriate. FIG. 10, therefore, broadly illustrates how individual system elements may be implemented in a relatively separated or relatively more integrated manner.

The computer system 1000 is shown comprising hardware elements that can be electrically coupled via a bus 1005 (or may otherwise be in communication, as appropriate). The hardware elements may include one or more processors 1010 used to implement method 900 described in FIG. 9, including without limitation one or more general-purpose processors and/or one or more special-purpose processors (such as digital signal processing chips, graphics acceleration processors, and/or the like); one or more input devices 1015 (e.g., touch-screen display used to receive user input at 930), which can include without limitation a camera, a mouse, a keyboard and/or the like; and one or more output devices 1020, which can include without limitation presenting unit 340, a printer and/or the like.

The computer system 1000 may further include (and/or be in communication with) one or more non-transitory storage devices 1025 (e.g., used to store downloaded indoor map application 320), which can comprise, without limitation, local and/or network accessible storage, and/or can include, without limitation, memory 1035 (e.g., used to store downloaded indoor map application 320), a disk drive, a drive array, an optical storage device, a solid-state storage device such as a random access memory ("RAM") and/or a read-only memory ("ROM"), which can be programmable, flash-updateable and/or the like. Such storage devices may be configured to implement any appropriate data storage, including without limitation, various file systems, database structures, and/or the like.

The computer system 1000 might also include a communications subsystem 1030, which can include without limitation a modem, a network card (wireless or wired), an infrared communication device, a wireless communication device and/or chipset (such as a Bluetooth® device, an 802.11 device, a Wi-Fi device, a WiMax device, cellular communication facilities, etc.), and/or the like. According to one embodiment of the present invention, the system 250 can be examples of a communication subsystem 1030. The communications subsystem 1030 may permit data to be exchanged with a network (such as the network described below, to name one example), other computer systems, and/or any other devices described herein. In many embodiments, the computer system 1000 may further comprise a non-transitory working memory 1035 (e.g., used with indoor map application 320), which can include a RAM or ROM device, as described above.

The computer system 1000 also can comprise software elements, shown as being currently located within the working memory 1035, including an operating system 1040, device drivers, executable libraries, and/or other code, such as one or more application programs 1045, which may comprise computer programs provided by various embodiments, and/or may be designed to implement methods, and/or configure systems, provided by other embodiments, as described herein. Merely by way of example, one or more procedures described with respect to the method(s) discussed above, for example as described with respect to FIG. 9, might be implemented as code and/or instructions executable by a computer (and/or a processor within a computer); in an aspect, then, such code and/or instructions can be used to configure and/or adapt a general purpose computer (or other device) to perform one or more operations in accordance with the described methods. For example the digitalized signal can be stored in working memory 1035.

A set of these instructions and/or codes might be stored on a computer-readable storage medium, such as the storage device(s) 1025 described above. In some cases, the storage medium might be incorporated within a computer system, such as computer system 1000. In other embodiments, the storage medium might be separate from a computer system (e.g., a removable medium, such as a compact disc), and/or provided in an installation package, such that the storage medium can be used to program, configure and/or adapt a general purpose computer with the instructions/code stored thereon. These instructions might take the form of executable code, which is executable by the computer system 1000 and/or might take the form of source and/or installable code, which, upon compilation and/or installation on the computer system 1000 (e.g., using any of a variety of generally available compilers, installation programs, compression/decompression utilities, etc.) then takes the form of executable code.

Substantial variations may be made in accordance with specific requirements. For example, customized hardware might also be used, and/or particular elements might be implemented in hardware, software (including portable software, such as applets, etc.), or both. Further, connection to other computing devices such as network input/output devices may be employed.

Some embodiments may employ a computer system (such as the computer system 1000) to perform methods in accordance with the disclosure. For example, some or all of the procedures of the described methods may be performed by the computer system 1000 in response to processor 1010 executing one or more sequences of one or more instructions (which might be incorporated into the operating system 1040 and/or other code, such as an application program 1045) contained in the working memory 935. Such instructions may be read into the working memory 1035 from another computer-readable medium, such as one or more of the storage device(s) 1025. Merely by way of example, execution of the sequences of instructions contained in the working memory 1035 might cause the processor(s) 1010 to perform one or more procedures of the methods described herein, for example one or more of the elements of the method described with respect to FIG. 9.

The terms "machine-readable medium" and "computer-readable medium," as used herein, refer to any medium that participates in providing data that causes a machine to operate in a specific fashion. In an embodiment implemented using the computer system 1000, various computer-readable media might be involved in providing instructions/code to processor(s) 1010 for execution and/or might be used to store and/or carry such instructions/code (e.g., as signals). In many implementations, a computer-readable medium is a physical and/or tangible storage medium. Such a medium may take many forms, including but not limited to, non-volatile media, volatile media, and transmission media. Non-volatile media include, for example, optical and/or magnetic disks, such as the storage device(s) 1025. Volatile media include, without limitation, dynamic memory, such as the working memory 1035. Transmission media include, without limitation, coaxial cables, copper wire and fiber optics, including the wires that comprise the bus 1005, as well as the various components of the communications subsystem 1030 (and/or the media by which the communications subsystem 1030 provides communication with other devices). Hence, transmission media can also take the form of waves (including without limitation radio, acoustic and/or light waves, such as those generated during radio-wave and infrared data communications). According to some embodiments, the system 250 can utilize a communication subsystem 930 to communicate with each other.

In one or more examples, the functions described may be implemented in hardware, software, firmware, or any combination thereof. If implemented in software, the functions may be stored on or transmitted over as one or more instructions or code on a computer-readable medium. Computer-readable media may include computer data storage media. Data storage media may be any available media that can be accessed by one or more computers or one or more processors to retrieve instructions, code and/or data structures for implementation of the techniques described in this disclosure. "Data storage media" as used herein refers to manufactures and does not refer to transitory propagating signals. By way of example, and not limitation, such computer-readable media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above may also be included within the scope of computer-readable media.

The code may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware stored on computer-readable media.

## Claims

1. A method for integration of an outdoor map and an indoor map associated with a venue using a mobile device comprising:
presenting (910) the outdoor map associated with an outdoor map application, wherein the outdoor map includes an area associated with the venue, and wherein data associated with the venue is not available to the outdoor map application;
overlaying (920) the indoor map on the area of the outdoor map associated with the venue, wherein the indoor map is associated with an indoor map application, and wherein the indoor map application and the outdoor map application are different applications;
receiving (930) a first indication of a first event associated with the venue; and
in response to receiving the first indication of the first event, allowing (940) the indoor map application to control an aspect associated with the presentation of the outdoor map with the overlaid indoor map.

2. The method of claim 1, wherein the first event comprises a user input to select the venue performed on the mobile device.

3. The method of claim 1, wherein the first event comprises a zooming action resulting in a minimum portion of the presentation of the outdoor map with the overlaid indoor map being covered by the indoor map, wherein the minimum portion is 50%.

4. The method of claim 1, wherein the first event is the mobile device being located inside the venue.

5. The method of claim 4, wherein the first event is detected based on location data associated with the indoor map application.

6. The method of claim 5, wherein the location data associated with the indoor map includes at least signal strength indication (RSSI) measurements or round-trip time (RTT) measurements received from one or more access points.

7. The method of claim 4, wherein the first event is detected based on satellite location services of the mobile device.

8. The method of claim 4, wherein satellite location services of the mobile device are disabled upon receiving indication of the mobile device being located inside the venue.

9. The method of claim 1, wherein one or more features associated with the indoor map application are restricted upon receiving indication of the mobile device being located outside the venue.

10. The method of claim 1, wherein the indoor map application is downloaded from an application store based on a user request, further comprising:
storing, in memory, the indoor map associated with the downloaded indoor map application.

11. The method of claim 1, further comprising:
receiving a second indication of a second event associated with outside the venue; and
in response to receiving the second indication of the second event, allowing the indoor map application to relinquish control back to the outdoor map application.

12. The method of claim 11, wherein the second event is the mobile device being located outside the venue, wherein the second event is the mobile device transitioning from inside to outside the venue, or wherein the second event comprises a second user input to select the outdoor map performed on the mobile device.

13. The method of claim 1, wherein the indoor map application in parallel with the outdoor map application control the presentation of the outdoor map with the overlaid indoor map, upon receiving indication of the mobile device being located inside the venue.

14. One or more computer-readable media storing computer-executable instructions for integrating an outdoor map and an indoor map associated with a venue that, when executed, cause one or more computing devices included in a mobile device to perform the method of any one of claims 1 to 13.

15. An apparatus for integrating an outdoor map and an indoor map associated with a venue comprising:
means for presenting (910) the outdoor map associated with an outdoor map application, wherein the outdoor map includes an area associated with the venue, and wherein data associated with the venue is not available to the outdoor map application;
means for overlaying (920) the indoor map on the area of the outdoor map associated with the venue, wherein the indoor map is associated with an indoor map application, and wherein the indoor map application and the outdoor map application are different applications;
means for receiving (930) a first indication of a first event associated with the venue; and
in response to receiving the first indication of the first event, means for allowing (940) the indoor map application to control an aspect associated with the presentation of the outdoor map with the overlaid indoor map.

## Patentansprüche

1. Ein Verfahren zur Integration einer Außenraum- bzw. Outdoor-Karte und einer Innenraum- bzw. Indoor-Karte, die mit einer Örtlichkeit assoziiert sind, unter Verwendung einer Mobileinrichtung, das Folgendes aufweist:
Darstellen (910) der Outdoor-Karte, die mit einer Outdoor-Kartenanwendung assoziiert ist, wobei die Outdoor-Karte einen Bereich, der mit der Örtlichkeit assoziiert ist, beinhaltet, und wobei die Daten, die mit der Örtlichkeit assoziiert sind, für die Outdoor-Kartenanwendung nicht verfügbar sind;
Überlagern (920) der Indoor-Karte auf den Bereich der Outdoor-Karte, die mit der Örtlichkeit assoziiert ist, wobei die Indoor-Karte mit einer Indoor-Kartenanwendung assoziiert ist, und wobei die Indoor-Kartenanwendung und die Outdoor-Kartenanwendung unterschiedliche Anwendungen sind;
Empfangen (230) einer ersten Anzeige eines ersten Ereignisses, das mit der Örtlichkeit assoziiert ist; und
ansprechend auf Empfangen der ersten Anzeige des ersten Ereignisses, Gestatten (940) der Indoor-Kartenanwendung, einen Aspekt zu steuern, der mit der Darstellung der Outdoor-Karte mit der Indoor-Karte assoziiert ist.

2. Verfahren nach Anspruch 1, wobei das erste Ereignis eine Nutzereingabe zum Auswählen der Örtlichkeit aufweist, die auf der Mobileinrichtung durchgeführt wird.

3. Verfahren nach Anspruch 1, wobei das erste Ereignis einen Zoom- bzw. Vergrößerungs/Verkleinerungs-Vorgang aufweist, der dazu führt, dass ein minimaler Teil der Darstellung der Outdoor-Karte mit der eingeblendeten bzw. überlagerten Indoor-Karte durch die Indoor-Karte abgedeckt wird, wobei der minimale Anteil 50% ist.

4. Verfahren nach Anspruch 1, wobei das erste Ereignis ist, dass die Mobileinrichtung innerhalb der Örtlichkeit angeordnet ist.

5. Verfahren nach Anspruch 4, wobei das erste Ereignis basierend auf Standortdaten detektiert wird, die mit der Indoor-Kartenanwendung assoziiert sind.

6. Verfahren nach Anspruch 5, wobei die Standortdaten, die mit der Indoor-Karte assoziiert sind, wenigstens Signalstärkenanzeige- bzw. RSSI-Messungen (RRSI = signal strength indication) oder Umlaufzeit- bzw. RTT-Messungen (RRT = roud-trip time) beinhalten, die von einem oder mehreren Zugriffspunkten empfangen werden.

7. Verfahren nach Anspruch 4, wobei das erste Ereignis basierend auf Satellitenstandortdiensten der Mobileinrichtung detektiert wird.

8. Verfahren nach Anspruch 4, wobei Satellitenstandortdienste der Mobileinrichtung deaktiviert werden auf Empfangen einer Anzeige hin, dass die Mobileinrichtung innerhalb der Örtlichkeit angeordnet ist.

9. Verfahren nach Anspruch 1, wobei ein oder mehrere Merkmale, die mit der Indoor-Kartenanwendung assoziiert sind, auf Empfangen einer Anzeige beschränkt sind, dass die Mobileinrichtung außerhalb der Örtlichkeit angeordnet ist.

10. Verfahren nach Anspruch 1, wobei die Indoor-Kartenanwendung von einem App-Store bzw. Anwendungsverteilerstelle basierend auf einer Nutzeranfrage heruntergeladen wird, das weiter Folgendes aufweist:
Speichern, im Speicher, der Indoor-Karte, die mit der heruntergeladenen Indoor-Kartenanwendung assoziiert ist.

11. Verfahren nach Anspruch 1, das weiter Folgendes aufweist:
Empfangen einer zweiten Anzeige eines zweiten Ereignisses, das mit einem Bereich außerhalb der Örtlichkeit assoziiert ist; und
ansprechend auf Empfangen der zweiten Anzeige des zweiten Ereignisses, Gestatten der Indoor-Kartenanwendung, die Steuerung zurück an die Outdoor-Kartenanwendung abzutreten.

12. Verfahren nach Anspruch 11, wobei das zweite Ereignis ist, dass die Mobileinrichtung außerhalb der Örtlichkeit angeordnet ist, oder wobei das zweite Ereignis ist, dass die Mobileinrichtung von innerhalb zu außerhalb der Örtlichkeit übergeht, oder wobei das zweite Ereignis eine zweite Nutzereingabe zum Auswählen der Outdoor-Karte aufweist, die auf der Mobileinrichtung durchgeführt wird.

13. Verfahren nach Anspruch 1, wobei die Indoor-Kartenanwendung parallel zu der Outdoor-Kartenanwendung die Darstellung der Outdoor-Karte mit der eingeblendeten Indoor-Karte steuert, und zwar auf Empfangen einer Anzeige hin, dass die Mobileinrichtung innerhalb der Örtlichkeit angeordnet ist.

14. Ein oder mehrere computerlesbare Medien, die von einem Computer ausführbare Instruktionen zum Integrieren einer Outdoor-Karte und einer Indoor-Karte speichern, die mit einer Örtlichkeit assoziiert sind, die, wenn sie ausgeführt werden, eine oder mehrere Rechnereinrichtungen, die in der Mobileinrichtung enthalten sind, zum Durchführen des Verfahrens nach einem der Ansprüche 1 bis 13 veranlassen.

15. Eine Vorrichtung zum Integrieren einer Outdoor-Karte und einer Indoor-Karte, die mit einer Örtlichkeit assoziiert sind, die Folgendes aufweist:
Mittel zum Darstellen (910) der Outdoor-Karte, die mit einer Outdoor-Kartenanwendung assoziiert ist, wobei die Outdoor-Karte einen Bereich, der mit der Örtlichkeit assoziiert ist, beinhaltet, und wobei Daten, die mit der Örtlichkeit assoziiert sind, für die Outdoor-Kartenanwendung nicht verfügbar sind;
Mittel zum Überlagern (920) der Indoor-Karte auf dem Bereich der Outdoor-Karte, die mit der Örtlichkeit assoziiert ist, wobei die Indoor-Karte mit einer Indoor-Kartenanwendung assoziiert ist, und wobei die Indoor-Kartenanwendung und die Outdoor-Kartenanwendung unterschiedliche Anwendungen sind;
Mittel zum Empfangen (930) einer ersten Anzeige eines ersten Ereignisses, das mit der Örtlichkeit assoziiert ist; und
ansprechend auf Empfangen der ersten Anzeige des ersten Ereignisses, Mittel zum Gestatten (940) der Indoor-Kartenanwendung, einen Aspekt zu steuern, der mit der Darstellung der Outdoor-Karte mit der überlagerten Indoor-Karte assoziiert ist.

## Revendications

1. Procédé d'intégration d'une carte d'extérieur et d'une carte d'intérieur associées à un lieu en utilisant un dispositif mobile, le procédé comprenant :
présenter (910) la carte d'extérieur associée à une application de carte d'extérieur, la carte d'extérieur comprenant une région associée au lieu, et des données associées au lieu n'étant pas disponibles pour l'application de carte d'extérieur ;
superposer (920) la carte d'intérieur sur la région de la carte d'extérieur associée au lieu, la carte d'intérieur étant associée à une application de carte d'intérieur, et l'application de la carte d'intérieur et l'application de la carte d'extérieur étant des applications différentes ;
recevoir (930) une première indication d'un premier événement associé au lieu ; et
en réponse à la réception de la première indication du premier événement, permettre (940) à l'application de la carte d'intérieur de contrôler un aspect associé à la présentation de la carte d'extérieur avec la carte d'intérieur superposée.

2. Procédé selon la revendication 1, dans lequel le premier événement comprend une entrée d'utilisateur pour sélectionner le lieu, réalisée sur le dispositif mobile.

3. Procédé selon la revendication 1, dans lequel le premier événement comprend une action de zoom ayant pour résultat qu'une portion minimale de la présentation de la carte d'extérieur avec la carte d'intérieur superposée est couverte par la carte d'intérieur, la portion minimale étant de 50 %.

4. Procédé selon la revendication 1, dans lequel le premier événement est que le dispositif mobile est situé à l'intérieur du lieu.

5. Procédé selon la revendication 4, dans lequel le premier événement est détecté sur la base de données d'emplacement associées à l'application de carte d'intérieur.

6. Procédé selon la revendication 5, dans lequel les données d'emplacement associées à la carte d'intérieur comprennent au moins des mesures d'indication d'intensité de signal (RSSI) ou des mesures de temps d'aller-retour (RTT) reçues d'un ou plusieurs points d'accès.

7. Procédé selon la revendication 4, dans lequel le premier événement est détecté sur la base de services de localisation par satellites du dispositif mobile.

8. Procédé selon la revendication 4, dans lequel les services de localisation par satellites du dispositif mobile sont désactivés suite à la réception d'une indication que le dispositif mobile est situé à l'intérieur du lieu.

9. Procédé selon la revendication 1, dans lequel un ou plusieurs éléments associés à l'application de carte d'intérieur sont restreints suite à la réception d'une indication que le dispositif mobile est situé à l'extérieur du lieu.

10. Procédé selon la revendication 1, dans lequel l'application de carte d'intérieur est téléchargée à partir d'un magasin d'applications sur la base d'une requête d'utilisateur, comprenant en outre :
stocker, en mémoire, la carte d'intérieur associée à l'application de carte d'intérieur téléchargée.

11. Procédé selon la revendication 1, comprenant en outre :
recevoir une deuxième indication d'un deuxième événement associé à l'extérieur du lieu ; et
en réponse à la réception de la deuxième indication du deuxième événement, permettre à l'application de carte d'intérieur de relâcher le contrôle pour le rendre à l'application de carte d'extérieur.

12. Procédé selon la revendication 11, dans lequel le deuxième événement est que le dispositif mobile est situé à l'extérieur du lieu, dans lequel le deuxième événement est que le dispositif mobile fait une transition de l'intérieur vers l'extérieur du lieu, ou dans lequel le deuxième événement comprend une deuxième entrée d'utilisateur pour sélectionner la carte d'extérieur réalisée sur le dispositif mobile.

13. Procédé selon la revendication 1, dans lequel l'application de la carte d'intérieur en parallèle avec l'application de la carte d'extérieur contrôle la présentation de la carte d'extérieur avec la carte d'intérieur superposée, suite à la réception d'une indication que le dispositif mobile est situé à l'intérieur du lieu.

14. Un ou plusieurs supports lisibles par un ordinateur mémorisant des instructions exécutables par un ordinateur pour intégrer une carte d'extérieur dans une carte d'intérieur associée à un lieu, instructions qui, lorsqu'elles sont exécutées, amènent un ou plusieurs dispositifs informatiques inclus dans un dispositif mobile à réaliser le procédé de l'une quelconque des revendications 1 à 13.

15. Dispositif pour intégrer une carte d'extérieur et une carte d'intérieur associées à un lieu, comprenant :
des moyens pour présenter (910) la carte d'extérieur associée à une application de carte d'extérieur, la carte d'extérieur comprenant une région associée au lieu, et des données associées au lieu n'étant pas disponibles pour l'application de carte d'extérieur ;
des moyens pour superposer (920) la carte d'intérieur sur la région de la carte d'extérieur associée au lieu, la carte d'intérieur étant associée à une application de carte d'intérieur, et l'application de la carte d'intérieur et l'application de la carte d'extérieur étant des applications différentes ;
des moyens pour recevoir (930) une première indication d'un premier événement associé au lieu ; et
en réponse à la réception de la première indication du premier événement, des moyens pour permettre (940) à l'application de la carte d'intérieur de contrôler un aspect associé à la présentation de la carte d'extérieur avec la carte d'intérieur superposée.
